# DEMANDE DE BREVET EUROPEEN

(11) **EP 1 544 050 A1**
(43) Date de publication de la demande: **22.06.2005**
(21) Numéro de dépôt: 04293034.7
(22) Date de dépôt: 17.12.2004
(51) Int. Cl.: B60R 21/01, B60K 28/14

(54) **Système de controle de l'alimentation en énergie d'organes fonctionnels d'un réseau de bord de véhicule automobile**

(30) Priorité: 19.12.2003 FR 0315103
(71) Demandeur: Peugeot Citroen Automobiles S.A., 78140 Vélizy Villacoublay (FR)
(72) Inventeur: Aubry, Vincent, 91400 Orsay (FR); Boucly, Bernard, 78150 Le Chesnay (FR); Pigot, Etienne, 78960 Voisins-le-Bretonneux (FR)
(74) Mandataire: Habasque, Etienne Joel Jean-François

(57) **Abrégé**

Ce système de contrôle de l'alimentation de puissance en énergie électrique d'organes fonctionnels (7,9) d'un réseau de bord de véhicule automobile, dans lequel les organes fonctionnels (7,9) sont raccordés à une source d'alimentation en énergie électrique embarquée (1), à travers une ligne d'alimentation de puissance (4), est caractérisé en ce que la ligne d'alimentation de puissance (4) est associée à des moyens formant interrupteur pilotable (10), dont l'ouverture et la fermeture sont contrôlées par des moyens de commande (11), en parallèle avec des moyens (12) de limitation de la puissance d'alimentation des organes fonctionnels.

## Description

La présente invention concerne un système de contrôle de l'alimentation de puissance en énergie électrique d'organes fonctionnels d'un réseau de bord d'un véhicule automobile.

On connaît déjà dans l'état de la technique des systèmes de contrôle de ce type dans lesquels les organes fonctionnels sont raccordés à une source d'alimentation en énergie électrique embarquée à bord du véhicule et formée par exemple par une batterie, à travers une ligne d'alimentation de puissance.

De très nombreux organes fonctionnels, électriques, électroniques ou électromécaniques, sont en effet directement connectés dans le véhicule sur la ligne d'alimentation de puissance +BAT permanente du véhicule.

Cette ligne reliée aux organes fonctionnels du réseau de bord est alors protégée par des éléments de protection tels que des fusibles.

Cependant, ces fusibles sont dimensionnés pour protéger le réseau contre des court-circuits francs sur la ligne ou dans les organes fonctionnels.

Or, d'autres modes de défaillance de type par exemple court-circuit impédant, c'est-à-dire un court-circuit présentant une impédance supérieure à 500 mΩ, ne sont pas protégés par ces fusibles et peuvent provoquer des échauffements importants d'organes et une décharge de la batterie.

Aucun diagnostic particulier ne permet de détecter ces défaillances.

Pour tenter de résoudre ces problèmes, on a déjà proposé différentes solutions dans l'état de la technique.

C'est ainsi par exemple que l'on a envisagé d'intégrer sur la ligne d'alimentation des moyens de commutation du +BAT permanent.

On a également proposé d'intégrer dans cette ligne, des moyens formant interrupteur intelligent ouvrant le circuit d'alimentation en cas de détection de fortes fuites de courant.

Enfin, on a également proposé d'assurer une protection locale de chaque organe fonctionnel contre ce mode de défaillance.

Cependant, toutes ces solutions présentent un certain nombre d'inconvénients notamment au niveau de leur impact sur l'architecture électrique du réseau, des difficultés d'implantation de celles-ci et enfin, de leur coût.

Le but de l'invention est donc de résoudre ces problèmes.

A cet effet, l'invention a pour objet un système de contrôle de l'alimentation de puissance en énergie électrique d'organes fonctionnels d'un réseau de bord de véhicule automobile, dans lequel les organes fonctionnels sont raccordés à une source d'alimentation en énergie électrique embarquée, à travers une ligne d'alimentation de puissance, caractérisé en ce que la ligne d'alimentation de puissance est associée à des moyens formant interrupteur pilotable, dont l'ouverture et la fermeture sont contrôlées par des moyens de commande, en parallèle avec des moyens de limitation de la puissance d'alimentation des organes fonctionnels.

Suivant d'autres caractéristiques :
- les moyens de commande comprennent des moyens de surveillance du réseau de bord du véhicule, pour détecter un état de veille/réveil de celui-ci et déclencher l'ouverture/la fermeture des moyens formant interrupteur pilotable, respectivement ;
- les moyens de commande comprennent des moyens de détection d'un choc du véhicule pour piloter à l'ouverture les moyens formant interrupteur pilotable ;
- les moyens de commande comprennent des moyens d'analyse du courant circulant sur la ligne d'alimentation de puissance, pour détecter une anomalie de fonctionnement et piloter à l'ouverture les moyens formant interrupteur pilotable ;
- les moyens de limitation de puissance comprennent une impédance ;
- l'impédance est formée par une résistance ;
- les moyens de limitation de puissance comprennent des moyens formant convertisseur continu-continu.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure actuelle d'une architecture électrique de véhicule automobile ; et
- la Fig.2 représente un schéma synoptique illustrant la structure et le fonctionnement d'un système de contrôle selon l'invention.

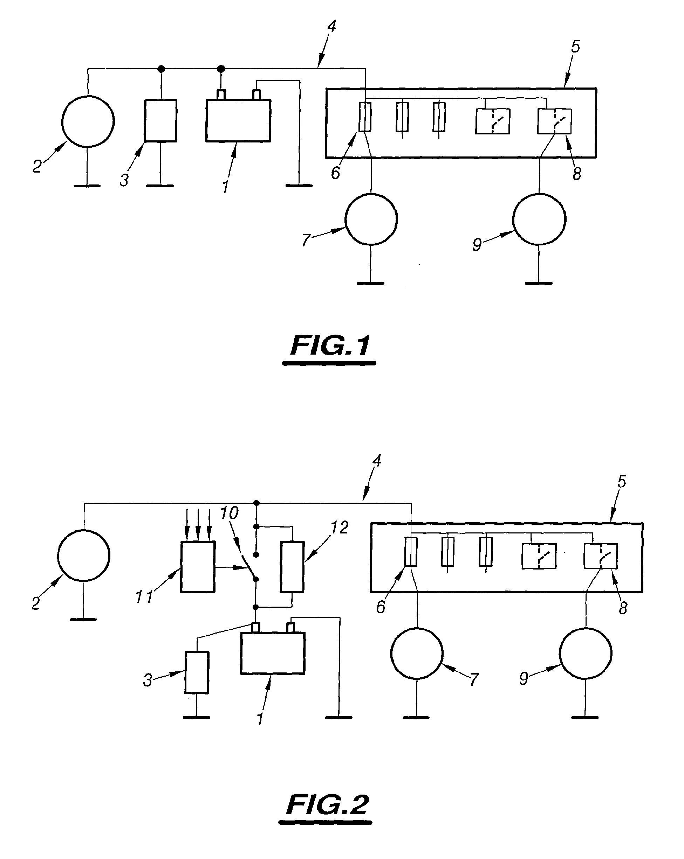

On a en effet illustré sur la figure 1 une architecture électrique de véhicule automobile, de l'état de la technique.

Cette architecture comporte une source d'alimentation en énergie électrique formée par exemple par une batterie désignée par la référence générale 1, raccordée par exemple à un alternateur désigné par la référence générale 2 et à un démarreur du moteur du véhicule désigné par la référence générale 3.

Par ailleurs, cette batterie est également reliée par une ligne d'alimentation de puissance en énergie électrique désignée par la référence générale 4, à des moyens de commande de l'alimentation d'organes fonctionnels, comprenant par exemple un boîtier de commutation et de protection, désigné par la référence générale 5.

Ce boîtier intègre alors par exemple des fusibles tels que celui désigné par la référence générale 6, permettant d'assurer l'alimentation d'un organe fonctionnel tel que l'organe fonctionnel 7, alimenté en permanence par le +BAT et protégé par le fusible.

Cependant, le boîtier peut également comporter des moyens de commutation d'alimentation tels que par exemple un relais d'alimentation 8 associé à un fusible, pour alimenter un organe fonctionnel tel que l'organe 9, qui n'est alors raccordé à la borne positive de l'alimentation +BAT que lorsque le relais correspondant est commuté en position de fermeture.

Comme cela a été indiqué précédemment, cette architecture présente un certain nombre d'inconvénients.

Pour résoudre ces problèmes, on propose d'associer à la ligne d'alimentation de puissance des organes fonctionnels, des moyens de sécurité.

Cette structure est illustrée sur la figure 2, dans laquelle des numéros de référence identiques désignent des pièces identiques ou analogues à celles illustrées sur la figure 1.

C'est ainsi par exemple que l'on reconnaît sur cette figure 2, la batterie 1, l'alternateur 2, le démarreur 3, la ligne d'alimentation de puissance 4, le boîtier de commutation et de protection 5, le fusible 6, l'organe fonctionnel 7, le relais 8 et l'organe fonctionnel 9.

Dans cette figure 2, la ligne d'alimentation de puissance 4 est associée à des moyens formant interrupteur pilotable, désignés par la référence générale 10 sur cette figure, associés à des moyens de commande de leur fonctionnement, désignés par la référence générale 11, et en parallèle aux bornes de ces moyens formant interrupteur pilotable, des moyens 12 de limitation de la puissance d'alimentation disponible des organes fonctionnels.

On conçoit alors que lorsque les moyens formant interrupteur pilotable 10 sont en position de fermeture, les organes fonctionnels sont alimentés sous la puissance nominale délivrée par la batterie 1 formant source d'alimentation en énergie électrique.

Par contre, lorsque les moyens formant interrupteur pilotable 10 sont en position d'ouverture, l'alimentation des organes fonctionnels et donc du reste du réseau de bord, n'est assurée que sous une puissance réduite, telle que définie par les moyens de limitation de puissance 12.

On conçoit alors que différentes réalisations possibles de ces moyens peuvent être envisagées.

Ainsi par exemple, les moyens formant interrupteur pilotable peuvent par exemple être formés par des moyens mécaniques ou électroniques à semi-conducteur, dont l'ouverture et la fermeture sont pilotées par des moyens de commande en fonction par exemple de la détection du passage du réseau de bord en état de veille à partir d'un état de réveil ou de la détection d'une anomalie de fonctionnement quelconque.

Ainsi par exemple, lorsque le réseau de bord passe en état de veille, les moyens de commande 11 peuvent déclencher une ouverture des moyens formant interrupteur pilotable 10, pour assurer une alimentation du réseau de bord sous une puissance réduite, afin de limiter les risques liés à l'application d'une puissance en permanence sur le réseau.

De même, ces moyens de commande 11 peuvent être reliés à des moyens de détection d'un choc du véhicule, tels que par exemple un calculateur de gestion des systèmes de sécurité tels que des modules à sac gonflable intégrés à bord du véhicule, pour déclencher l'ouverture des moyens formant interrupteur pilotable en cas de choc du véhicule et commuter ainsi celui-ci dans un état de sécurisation du réseau de bord.

De même, ces moyens de commande peuvent être reliés à des moyens d'analyse du courant circulant sur la ligne d'alimentation de puissance, pour détecter une défaillance de fonctionnement quelconque et donc commuter l'alimentation du réseau de bord sur les moyens de limitation de puissance afin d'éviter toute dégradation plus importante de ce réseau.

Les moyens de limitation de puissance peuvent également se présenter sous différentes formes.

Ainsi par exemple, ces moyens peuvent comporter une impédance telle qu'une résistance de limitation de puissance, associée par exemple à un fusible ou encore un composant à semi-conducteur de limitation de courant.

De même, ces moyens de limitation de puissance peuvent être formés par des moyens formant convertisseur continu-continu, interposés entre la source d'énergie et le reste du réseau, pour assurer une réduction de puissance prélevée sur la batterie.

Les moyens de commande 11 sont également adaptés pour piloter à la fermeture les moyens formant interrupteur pilotable lors de la détection d'événements particuliers, tels que par exemple la mise du contact du véhicule, un signal quelconque de réveil du réseau de bord du véhicule, tel que circulant par exemple sur le réseau multiplexé de transmission d'informations ou autres.

Bien entendu, d'autres modes de réalisation encore peuvent être envisagés.

On conçoit alors qu'une telle structure présente un certain nombre d'avantages, notamment au niveau de la sécurité de fonctionnement du réseau de bord, tout en maintenant une architecture avec très peu de modifications par rapport aux architectures actuelles.

## Revendications

1. Système de contrôle de l'alimentation de puissance en énergie électrique d'organes fonctionnels (7,9) d'un réseau de bord de véhicule automobile, dans lequel les organes fonctionnels (7,9) sont raccordés à une source d'alimentation en énergie électrique embarquée (1), à travers une ligne d'alimentation de puissance (4), **caractérisé en ce que** la ligne d'alimentation de puissance (4) est associée à des moyens formant interrupteur pilotable (10), dont l'ouverture et la fermeture sont contrôlées par des moyens de commande (11), en parallèle avec des moyens (12) de limitation de la puissance d'alimentation des organes fonctionnels.

2. Système selon la revendication 1, **caractérisé en ce que** les moyens de commande (11) comprennent des moyens de surveillance du réseau de bord du véhicule, pour détecter un état de veille/réveil de celui-ci et déclencher l'ouverture/la fermeture des moyens formant interrupteur pilotable (10), respectivement.

3. Système selon la revendication 1 ou 2, **caractérisé en ce que** les moyens de commande (11) comprennent des moyens de détection d'un choc du véhicule pour piloter à l'ouverture les moyens formant interrupteur pilotable (10).

4. Système selon l'une quelconque des revendications précédentes, **caractérisé en ce que** les moyens de commande (11) comprennent des moyens d'analyse du courant circulant sur la ligne d'alimentation de puissance (4), pour détecter une anomalie de fonctionnement et piloter à l'ouverture les moyens formant interrupteur pilotable (10).

5. Système selon l'une quelconque des revendications précédentes, **caractérisé en ce que** les moyens de limitation de puissance (12) comprennent une impédance.

6. Système selon la revendication 5, **caractérisé en ce que** l'impédance est formée par une résistance (12).

7. Système selon l'une quelconque des revendications précédentes, **caractérisé en ce que** les moyens de limitation de puissance (12) comprennent des moyens formant convertisseur continu-continu.
